# EUROPEAN PATENT APPLICATION

(11) **EP 4 369 186 A1**
(43) Date of publication of application: **15.05.2024**
(21) Application number: 22866694.7
(22) Date of filing: 08.09.2022
(51) Int. Cl.: G06F 9/448, G06F 9/451

(54) **CONTROL METHOD AND APPARATUS, DEVICE, AND STORAGE MEDIUM**

(30) Priority: 10.09.2021 CN 202111059948
(71) Applicant: China Faw Co., Ltd., Changchun, Jilin 130011 (CN)
(72) Inventor: WU, Mingzhe, Changchun, Jilin 130011 (CN); ZHENG, Hongli, Changchun, Jilin 130011 (CN); LIU, Zhaoyang, Changchun, Jilin 130011 (CN); CAI, Xu, Changchun, Jilin 130011 (CN)
(74) Representative: Penza, Giancarlo
(86) International application number: PCT/CN2022/117784
(87) International publication number: WO 2023/036233

(57) **Abstract**

The disclosure discloses a management method and apparatus, a device and a storage medium. The management method is applied to a management system, where the management system includes: a reception apparatus, an input source, a first executor and a second executor, where the first executor and the second executor are separately connected to the reception apparatus, and the input source is connected to the reception apparatus; and the management method includes: obtaining input information by the reception apparatus through the input source; determining a target execution instruction by the reception apparatus according to the input information; controlling, by the reception apparatus, the first executor to execute the target execution instruction; and determining a predicted execution result according to the target execution instruction, transmitting the predicted execution result to the second executor and causing the second executor to display the predicted execution result by the reception apparatus.

## Description

### Cross-Reference to Related Application

The disclosure claims the priority to Chinese Patent Application No. 202111059948.0, filed with the Chinese Patent Office on September 10, 2021, which is incorporated herein in its entirety by reference.

### Technical Field

Examples of the disclosure relate to the technical field of vehicles, in particular to a control method and apparatus, a device and a storage medium.

### Background

As electronic devices develop and control terminals and display terminals increase, conflicts between control and display gradually arise and escalate.

Some conflicts can be solved through an interaction method in the related art, through which inputs and outputs are controlled by executable programs controlling an executor. However, an interaction mode (an execution policy and a display policy) is required to be developed correspondingly for every executable program. If the interaction mode is to be changed, corresponding programs are needed to be changed, and tested and verified again. After such change, upgrade of a wide range of applications is required, which is merely feasible in a specific state in numerous fields such as automobiles.

### Summary

Examples of the disclosure provide a management method and apparatus, a device and a storage medium, through which conflicts between control and display can be solved, and a second executor can display a result firstly without waiting for an execution result of a first executor.

In a first aspect, the example of the disclosure provides a management method. The management method is applied to a management system, where the management system includes: a reception apparatus, an input source, a first executor and a second executor, where the first executor and the second executor are separately connected to the reception apparatus, and the input source is connected to the reception apparatus; and the management method includes:
obtaining input information by the reception apparatus through the input source;
determining a target execution instruction by the reception apparatus according to the input information;
controlling, by the reception apparatus, the first executor to execute the target execution instruction; and
determining a predicted execution result according to the target execution instruction, transmitting the predicted execution result to the second executor and causing the second executor to display the predicted execution result by the reception apparatus.

In a second aspect, the example of the disclosure further provides a management apparatus. The management apparatus includes: a reception apparatus, where the reception apparatus includes:
an obtaining module configured to obtain input information through an input source;
a determination module configured to determine a target execution instruction according to the input information;
a control module configured to control a first executor to execute the target execution instruction; and
a transmission module configured to determine a predicted execution result according to the target execution instruction, transmit the predicted execution result to a second executor and cause the second executor to display the predicted execution result.

In a third aspect, the example of the disclosure further provides an electronic device. The electronic device includes: a memory, a processor and a computer program that is stored on the memory and may be run on the processor, where the processor implements the management method according to any one of the examples of the disclosure when executing the program.

In a fourth aspect, the example of the disclosure further provides a computer-readable storage medium storing a computer program, where the computer program implements the management method according to any one of the examples of the disclosure when executed by a processor.

### Brief Description of the Drawings

The accompanying drawings required in examples will be briefly described below. It should be understood that the following accompanying drawings merely show some examples of the disclosure. A person of ordinary skill in the art can still derive other relevant accompanying drawings from these accompanying drawings without creative efforts.
Fig. 1 is a flowchart of a management method according to an example of the disclosure;
Fig. 1a is a schematic structural diagram of a management system according to an example of the disclosure;
Fig. 1b is a schematic structural diagram of another management system according to an example of the disclosure;
Fig. 2 is a schematic structural diagram of a management apparatus according to an example of the disclosure;
Fig. 3 is a schematic structural diagram of an electronic device according to an example of the disclosure; and
Fig. 4 is a schematic structural diagram of a computer-readable storage medium including a computer program according to an example of the disclosure.

### Detailed Description of the Embodiments

The disclosure will be described in detail below with reference to accompanying drawings and in conjunction with examples. It can be understood that the examples described herein are merely used to explain the disclosure. In addition, it should be noted that merely some rather than all of structures related to the disclosure are shown in the accompanying drawings for the convenience of description. In addition, the examples in the disclosure and features in the examples can be combined with one another if there is no conflict.

It should be noted that illustrative examples are described as processing or methods in the form of flowcharts. Although operations (or steps) in the flowcharts are described as sequential processing, many operations can be implemented in parallel, concurrently or simultaneously. In addition, the operations can be reordered. The processing can be terminated when its operations are completed, but can further include additional steps not included in the accompanying drawings. The processing can correspond to methods, functions, procedures, subroutines, subprograms, etc. In addition, the examples in the disclosure and features in the examples can be combined with one another if there is no conflict.

As used in the disclosure, the term "comprise" or "include" and its variants indicate open-ended including, that is, "including but not limited to". The term "based on" indicates "at least partially based on". The term "one example" indicates "at least one example".

It should be noted that since similar reference numerals and letters indicate similar items in the following accompanying drawings, once defined in one accompanying drawing, an item does not need to be defined and explained in subsequent accompanying drawings. In addition, in the description of the disclosure, the terms "first", "second", etc. are merely used for distinguishing description and cannot be understood as indicating or implying relative importance.

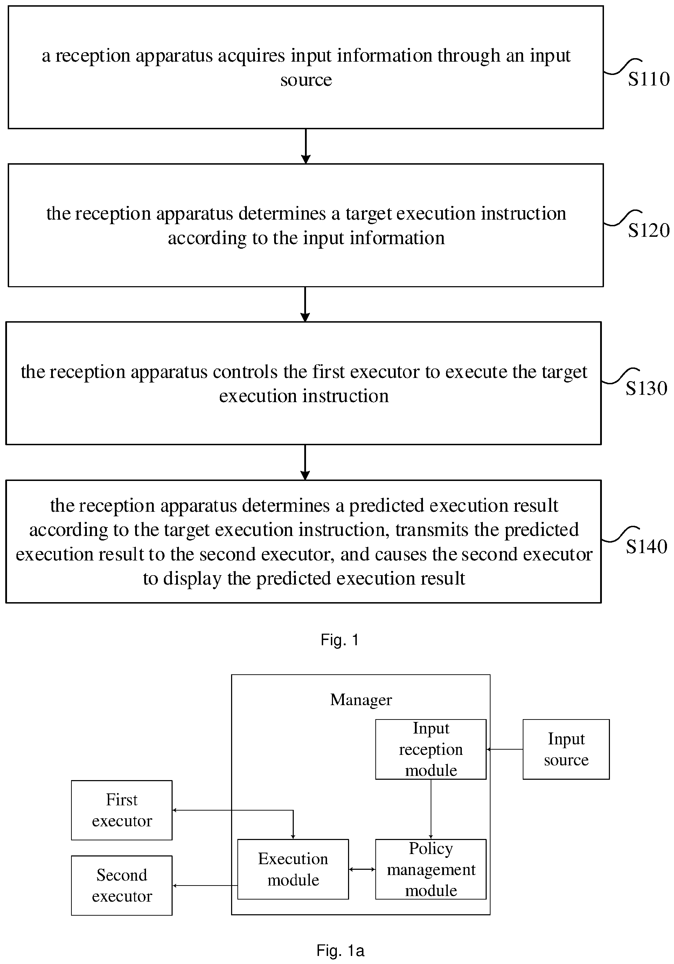

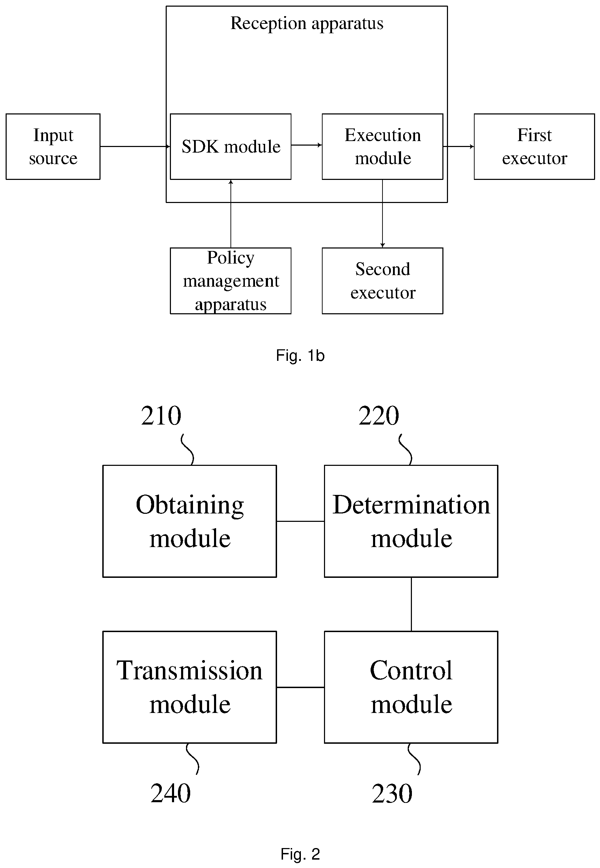

Fig. 1 is a flowchart of a management method according to an example of the disclosure. This example may be applied to the case where a first executor, a second executor, a first input source and a second input source are managed. The method may be executed by a management apparatus according to the example of the disclosure. The apparatus may be implemented through software and/or hardware. As shown in Fig. 1, the method includes:
S110. A reception apparatus obtains input information through an input source.

In this example, the input information is input from the input source. The input source may be a variety of input devices including screen inputs, voice inputs and camera inputs of controllers of an infotainment system and an air conditioning system; hard buttons, buttons or smart surface buttons of a steering wheel, an air conditioner, a window, etc.; external connected devices: a mobile phone, a tablet computer, etc. connected to the infotainment system through an universal serial bus (USB) or WIFL Bluetooth, a peripheral device connected to a whole vehicle through a whole vehicle network connection (a controller area network (CAN), network, Ethernet, etc.), other types of normal controllers, sensors, etc. connected through hard-wired input/output (I/O), and a cloud server, etc. connected to the whole vehicle through on-board Ethernet; and built-in applications: a whole vehicle controller that provides navigation and positioning information, and Cloud that transmits road information and other navigation information, weather information, smart city information, etc. transmitted to a local side.

In this example, the input information includes at least one of the following: data input by a user and instructions input by the user, by, for example, clicking a button of the air conditioner by the user.

In this example, the reception apparatus may be a manager. The manager includes: an input reception module, a policy management module and an execution module, where the input reception module is connected to the input source, the policy management module is connected to the input reception module, and the execution module is connected to the policy management module. The manager may be a controller carried in an electronic control unit (ECU) on a vehicle. The controller includes an infotainment host; controllers of a vehicle body, a chassis and an engine; and automatic driving related controllers. The reception apparatus may also include: a software development kit (SDK) module and an execution module, where the SDK module is connected to the input source, the SDK module is connected to the execution module, and the execution module is connected to the executor, where a target policy is encapsulated in the SDK module.

The management method provided by the example of the disclosure is applied to a management system, where the management system includes: a reception apparatus, an input source, a first executor and a second executor, where the first executor and the second executor are separately connected to the reception apparatus, and the input source is connected to the reception apparatus.

S120. The reception apparatus determines a target execution instruction according to the input information.

In one example, the step that the reception apparatus determines a target execution instruction according to the input information may include: the reception apparatus may search a table according to the input information, and obtain the target execution instruction corresponding to the input information. The step that the reception apparatus determines a target execution instruction according to the input information may further include: the reception apparatus inputs the input information into a target model, and obtains the target execution instruction corresponding to the input information.

S130. The reception apparatus controls the first executor to execute the target execution instruction.

In this example, the first executor is a display and execution terminal. The first executor includes: an infotainment system display screen including an instrument screen, a console, a passenger seat screen, a rear seat screen, etc.; an onboard air conditioner, a head-up display (HUD), a circumferential reversing camera, transparent A-pillar, a streaming rearview mirror, event data recorder, etc.; voice feedback information; whole vehicle prompt information or sound, etc.; status lights of the hard buttons, buttons or smart surface buttons of the steering wheel, the air conditioner and the window; and controllers of the window and a door.

S140. The reception apparatus determines a predicted execution result according to the target execution instruction, transmits the predicted execution result to the second executor, and causes the second executor to display the predicted execution result.

In this example, the second executor is a display terminal for displaying the predicted execution result or a target execution result transmitted by the first executor.

Alternatively, after the step that the reception apparatus determines a predicted execution result according to the target execution instruction, and transmits the predicted execution result to the second executor, the method further includes:
The reception apparatus receives the target execution result transmitted by the first executor.

The reception apparatus transmits the target execution result to the second executor and causes the second executor to display the target execution result under the condition that the target execution result is different from the predicted execution result.

In this example, the target execution result is an execution result obtained after the first executor executes the input information.

In one example, whether the target execution result is identical to the predicted execution result is determined. Based on a determination result that the target execution result is different from the predicted execution result, the reception apparatus transmits the target execution result to the second executor, and the second executor displays the target execution result. Based on a determination result that the target execution result is identical to the predicted execution result, the target execution result may be skipped, or the target execution result may be superimposed and displayed on the second executor.

Alternatively, the method further includes:
The reception apparatus skips the target execution result under the condition that the target execution result is identical to the predicted execution result.

Alternatively, the reception apparatus includes: an input reception module, a policy management module and an execution module, where the input reception module is connected to the input source, the policy management module is connected to the input reception module, and the execution module is connected to the policy management module.

In one example, the input reception module is configured to transmit the input information to the policy management module. The policy management module is configured to determine the target execution instruction according to the input information, and transmit the target execution instruction to the execution module. The execution module is configured to transmit a control instruction or display information to the first executor for being executed.

In one example, as shown in Fig. 1a, the management system includes: a reception apparatus, an input source, a first executor and a second executor, where the first executor and the second executor are separately connected to the reception apparatus, and the input source is connected to the reception apparatus. The reception apparatus includes: an input reception module, a policy management module and an execution module, where the input reception module is connected to the input source, the policy management module is connected to the input reception module, and the execution module is connected to the policy management module. The input source transmits the control instruction to the manager, and the input reception module in the manager transmits the input information to the strategy management module. The strategy management module determines the target execution instruction according to the input information and transmits the target execution instruction to the execution module. The execution module transmits the control instruction or the display information to the first executor for being executed. At the same time, the strategy management module may determine an execution result in advance, and transmit the result to the execution module first for being displayed on the second executor. After the first executor completes execution, the execution result is transmitted back to the policy management module, and the policy management module determines the execution result and synchronizes the result to the second executor through the execution module (the second executor may be a plurality of display actuators of various kinds).

It should be noted that the input reception module and the execution module may be the same application or service. The executor and the manager may be the same controller (uniform parts on a vehicle).

Alternatively, after the step that the reception apparatus determines a predicted execution result is according to the target execution instruction, transmits the predicted execution result to the second executor and causes the second executor to display the predicted execution result, the method further includes:
The second executor is controlled to resume displaying an initial content under the condition that time for which the second executor displays the predicted execution result is longer than a time threshold.

In this example, the time threshold may be set by the user or the system.

In this example, the initial content is a content displayed before the second executor displays the predicted execution result.

Alternatively, the reception apparatus includes: an SDK module and an execution module, where the SDK module is connected to the input source, the SDK module is connected to the execution module, and the execution module is connected to the executor, where a target policy is encapsulated in the SDK module.

Alternatively, the management system further includes: a policy management apparatus, and the policy management apparatus is connected to the SDK module; and the management method further includes:
The reception apparatus receives a changed target policy synchronously transmitted under the condition that the target policy is changed.

And alternatively,
The SDK module transmits a download request to the policy management apparatus and causes the policy management apparatus to determine the target policy according to the download request and transmit the target policy to the SDK module.

In one example, as shown in Fig. 1b, the management system includes: a reception apparatus, an input source, a first executor and a second executor, where the first executor and the second executor are separately connected to the reception apparatus, and the input source is connected to the reception apparatus. The reception apparatus includes: an SDK module and an execution module, where the SDK module is connected to the input source, the SDK module is connected to the execution module, and the execution module is connected to the executor, where a target policy is encapsulated in the SDK module. The management system further includes: a policy management apparatus, and the policy management apparatus is connected to the SDK module. An objective of the management method is to solve the problem of frequent inter-process communication between an application and the policy management module in the case that an input reception application and an execution application are the same application.
1) A policy is downloaded from the policy management apparatus in an initialized SDK module.
2) An input is transmitted by the input source, and the SDK module transmits a target execution result to the execution module, and finally outputs same to the first executor.
3) When a policy rule changes, the policy management apparatus synchronizes the policy to the SDK module.

The example of the disclosure reduces inter-process communication of the system, reduces consumption of a central processing unit (CPU), and simplifies a calling sequence.

In this example, the reception apparatus obtains input information through the input source. The reception apparatus determines a target execution instruction according to the input information. The reception apparatus controls the first executor to execute the target execution instruction. The reception apparatus determines a predicted execution result according to the target execution instruction, transmits the predicted execution result to the second executor and causes the second executor to display the predicted execution result, such that a conflict between control and display is solved, and the second executor can display a display result firstly without waiting for the execution result of the first executor.

Fig. 2 is a schematic structural diagram of a management apparatus according to an example of the disclosure. This example may be applied to the case where a first executor, a second executor, a first input source and a second input source are managed. The apparatus may be implemented through software and/or hardware. The apparatus may be integrated in any device providing management functions. As shown in Fig. 2, the management apparatus includes: a reception apparatus, where the reception apparatus includes: an obtaining module 210, a determination module 220, a control module 230 and a transmission module 240.

The obtaining module is configured to obtain input information through an input source. The determination module is configured to determine a target execution instruction according to the input information. The control module is configured to control the first executor to execute the target execution instruction. The transmission module is configured to determine a predicted execution result according to the target execution instruction, transmit the predicted execution result to the second executor and cause the second executor to display the predicted execution result.

The product may execute the method according to any example of the disclosure, and has corresponding function modules and beneficial effects for executing the method.

In this example, the reception apparatus obtains the input information through the input source. The reception apparatus determines the target execution instruction according to the input information. The reception apparatus controls the first executor to execute the target execution instruction. The reception apparatus determines the predicted execution result according to the target execution instruction, transmits the predicted execution result to the second executor and causes the second executor to display the predicted execution result, such that a conflict between control and display is solved, and the second executor can display a display result firstly without waiting for the execution result of the first executor.

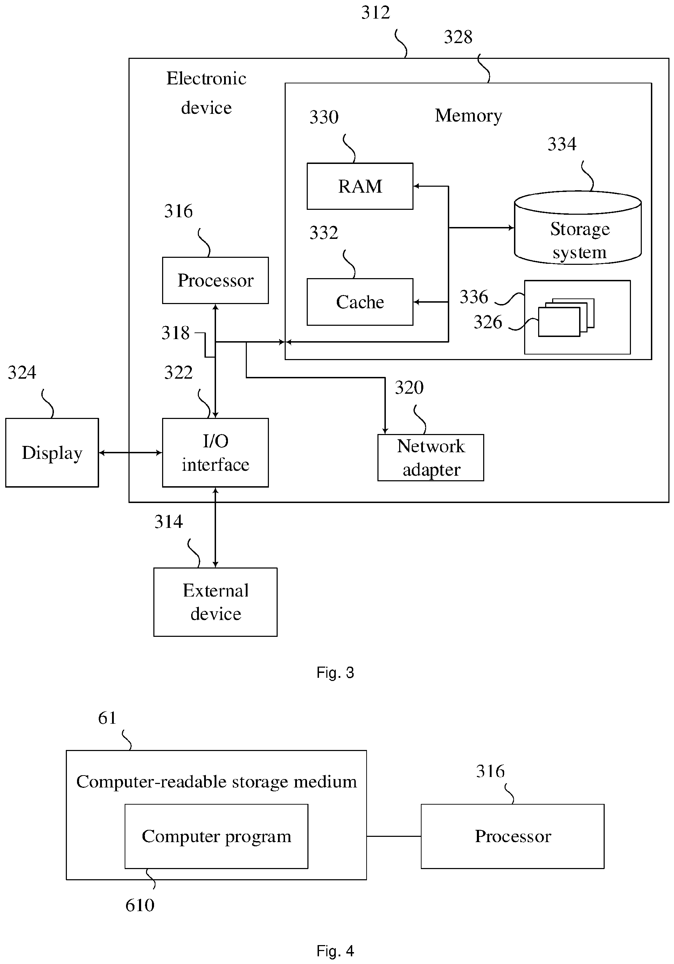

Fig. 3 is a schematic structural diagram of an electronic device according to Example 3 of the disclosure. Fig. 3 shows a block diagram of the electronic device 312 for implementing an embodiment of the disclosure. The electronic device 312 shown in Fig. 3 is merely one instance. The device 312 is a computer device with a typical track fitting function.

As shown in Fig. 3, the electronic device 312 is in the form of a general-purpose computer device. The electronic device 312 may include assemblies as follows: one or more processors 316, a storage apparatus 328, and a bus 318 connecting different system assemblies (including the storage apparatus 328 and the processor 316).

The bus 318 represents one or more of several kinds of bus structures, and includes a memory bus or a peripheral bus of a memory controller, a local bus for an accelerated graphics port and a processor, or a local bus using any bus structure of various kinds of bus structures. For example, these architectures include an industry standard architecture (ISA) bus, a micro channel architecture (MCA) bus, an enhanced ISA bus, a video electronics standards association (VESA) local bus and a peripheral component interconnect (PCI) bus.

The electronic device 312 typically includes various kinds of computer system readable media. These media may be any available medium that may be accessed by the electronic device 312, and include volatile and nonvolatile media, and removable and non-removable media.

The storage apparatus 328 may include a computer system readable medium in the form of a volatile memory, such as a random access memory (RAM) 330 and/or a cache memory 332. The electronic device 312 may include other removable/non-removable, and volatile/nonvolatile computer system storage media. As an example merely, the storage system 334 may be used to read from and write to non-removable and nonvolatile magnetic media (commonly referred to as a "hard disk drive"), and may provide a disk drive for reading from and writing to removable and nonvolatile magnetic disks (such as a "floppy disk"), and an optical disk drive for reading from and writing to removable and nonvolatile optical disks (for example, a compact disc-read only memory (CD-ROM), a digital video disc-read only memory (DVD-ROM) or other optical media). In these cases, each drive may be connected to the bus 318 through one or more data medium interfaces. The storage apparatus 328 may include at least one program product, the program product has a set of (for example, at least one) program modules, and these program modules are configured to execute functions of various examples of the disclosure.

A program 336 with a set of (at least one) program modules 326 may be stored in, for example, the storage apparatus 328. Such program modules 326 include an operation system, one or more application programs, other program modules and program data, and each or a combination of these examples may include implementation of a network environment. The program module 326 generally executes functions and/or methods in the examples of the disclosure.

The electronic device 312 may also communicate with one or more external devices 314 (for example, a keyboard, a pointing device, a camera, a display 324, etc.), one or more devices that make users interact with the electronic device 312, and/or any device that makes the electronic device 312 communicate with one or more other computer devices (for example, a network card, a modem, etc.). This communication may be performed through an input/output (I/O) interface 322. Further, the electronic device 312 may also communicate with one or more networks (for example, a local area network (LAN), a wide area network (WAN) and/or a public networks, for example the Internet) through a network adapter 320. As shown in the figures, the network adapter 320 communicates with other modules of the electronic device 312 through the bus 318. It should be understood that other hardware and/or software modules may be used in conjunction with the electronic device 312, and include: microcodes, device drives, redundant processing units, external disk drive arrays, redundant arrays of independent disks (RAID) systems, tape drives, data backup storage systems, etc.

The processor 316 runs a program stored in the storage apparatus 328, and then executes various functional applications and data processing, for example, implements the management method according to the above example of the disclosure:
A reception apparatus obtains input information through an input source.

The reception apparatus determines a target execution instruction according to the input information.

The reception apparatus controls a first executor to execute the target execution instruction.

The reception apparatus determines a predicted execution result according to the target execution instruction, transmits the predicted execution result to a second executor and causes the second executor to display the predicted execution result.

Fig. 4 is a schematic structural diagram of a computer-readable storage medium including a computer program according to an example of the disclosure. The example of the disclosure provides a computer-readable storage medium 61 storing a computer program 610, and the program implements the management method according to the example of the disclosure when executed by one or more processors:
A reception apparatus obtains input information through an input source.

The reception apparatus determines a target execution instruction according to the input information.

The reception apparatus controls a first executor to execute the target execution instruction.

The reception apparatus determines a predicted execution result according to the target execution instruction, transmits the predicted execution result to a second executor and causes the second executor to display the predicted execution result.

Any combination of one or more computer-readable media may be adopted. The computer-readable medium may be a computer-readable signal medium or a computer-readable storage medium or any one of their combinations. The computer-readable storage medium may be, for example, an electric, magnetic, optical, electromagnetic, infrared, or semiconductor system, apparatus or device, or any one of their combinations. The computer-readable storage medium includes: an electrical connection with one or more wires, a portable computer disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any one of their suitable combinations. In the description, the computer-readable storage medium may be any tangible medium including or storing a program, and the program may be used by or in combination with an instruction execution system, apparatus or device.

The computer-readable signal medium may include a data signal propagated in a baseband or as part of a carrier wave, in which a computer-readable program code is carried. This propagated data signal may have many forms, including but not limited to an electromagnetic signal, an optical signal or any one of their suitable combinations. The computer-readable signal medium may further be any computer-readable medium other than the computer-readable storage medium, and the computer-readable medium may send, propagate or transmit a program used by or in combination with the instruction execution system, apparatus or device.

A program code included in the computer-readable medium may be transmitted by any suitable medium, including but not limited to: a wireless, wire, optical cable, radio frequency (RF) medium, etc., or any one of their suitable combinations.

In some embodiments, a client side and a server may communicate by using any currently known or future developed network protocol such as the hyper text transfer protocol (HTTP), and may be interconnected with digital data communication in any form or medium (for example, a communication network). Instances of the communication network include a local area network (LAN), a wide area network (WAN), internet work (for example, the Internet), an end-to-end network (for example, adhoc end-to-end network), and any currently known or future developed network.

The computer-readable medium may be included in the electronic device, or exist independently without being fitted into the electronic device.

Computer program codes for executing the operations of the disclosure may be written in one or more programming languages or their combinations, and the programming languages include object-oriented programming languages such as Java, Smalltalk. C++, and further include conventional procedural programming languages such as "C" language or similar programming languages. The program codes may be completely executed on a computer of the user, partially executed on the computer of the user, executed as an independent software package, partially executed on the computer of the user and a remote computer, or completely executed on the remote computer or a server. In the case of involving the remote computer, the remote computer may be connected to the computer of the user through any kind of network, including a LAN or WAN, or may be connected to an external computer (for example, through the Internet provided by an Internet service provider).

The flowcharts and block diagrams in the accompanying drawings illustrate the architectures, functions and operations that may be implemented by the systems, the methods and the computer program products according to various examples of the disclosure. In this regard, each block in the flowchart or block diagram may represent a module, a program segment, or a part of a code that includes one or more executable instructions for implementing specified logical functions. It should also be noted that in some alternative implementations, the functions noted in the blocks may occur in an order different than those noted in the accompanying drawings. For example, two blocks represented in succession may actually be executed in substantially parallel, and may sometimes be executed in an reverse order depending on the functions involved. It should also be noted that each block in the block diagram and/or flowchart, and a combination of blocks in the block diagram and/or flowchart may be implemented by a specific hardware-based system that executes specified functions or operations, or may be implemented by a combination of specific hardware and computer instructions.

The units involved in the example of the disclosure may be implemented by software or hardware.

The functions described above herein may be executed at least in part by one or more hardware logic components. For example, usable hardware logic components of exemplary types include an field programmable gate array (FPGA), an application specific integrated circuit (ASIC), an application specific standard parts (ASSP), a system on chip (SOC), a complex programmable logic device (CPLD), etc.

In the context of the disclosure, a machine-readable medium may be a tangible medium, and may include or store a program that is used by or used in combination with the instruction execution system, apparatus or device. The machine-readable medium may be a machine-readable signal medium or a machine-readable storage medium. The machine-readable storage medium may include an electric, magnetic, optical, electromagnetic, infrared, or semiconductor system, apparatus or device, or any one of their combinations. The machine-readable storage medium includes an electrical connection based on one or more wires, a portable computer disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any one of their suitable combinations.

## Claims

1. A management method, applied to a management system, wherein the management system comprises: a reception apparatus, an input source, a first executor and a second executor, wherein the first executor and the second executor are separately connected to the reception apparatus, and the input source is connected to the reception apparatus; and the management method comprises:
obtaining input information by the reception apparatus through the input source;
determining a target execution instruction by the reception apparatus according to the input information;
controlling, by the reception apparatus, the first executor to execute the target execution instruction; and
determining a predicted execution result according to the target execution instruction, transmitting the predicted execution result to the second executor and causing the second executor to display the predicted execution result by the reception apparatus.

2. The method according to claim 1, wherein after the determining a predicted execution result according to the target execution instruction and transmitting the predicted execution result to the second executor by the reception apparatus, the method further comprises:
receiving, by the reception apparatus, the target execution result transmitted by the first executor; and
transmitting the target execution result to the second executor and causing the second executor to display the target execution result by the reception apparatus under the condition that the target execution result is different from the predicted execution result.

3. The method according to claim 2, further comprising:
skipping the target execution result by the reception apparatus under the condition that the target execution result is identical to the predicted execution result.

4. The method according to claim 1, wherein the reception apparatus comprises: an input reception module, a policy management module and an execution module, wherein the input reception module is connected to the input source, the policy management module is connected to the input reception module, and the execution module is connected to the policy management module.

5. The method according to claim 1, wherein after the determining a predicted execution result according to the target execution instruction, transmitting the predicted execution result to the second executor and causing the second executor to display the predicted execution result by the reception apparatus, the method further comprises:
controlling the second executor to resume displaying an initial content under the condition that time for which the second executor displays the predicted execution result is longer than a time threshold.

6. The method according to claim 1, wherein the reception apparatus comprises: a software development kit (SDK) module and an execution module, wherein the SDK module is connected to the input source, the SDK module is connected to the execution module, and the execution module is connected to the executor, wherein a target policy is encapsulated in the SDK module.

7. The method according to claim 6, wherein the management system further comprises: a policy management apparatus, and the policy management apparatus is connected to the SDK module; and the management method further comprises:
receiving, by the reception apparatus, a changed target policy synchronously transmitted by the policy management apparatus under the condition that the target policy is changed;
and alternatively,
transmitting a download request to the policy management apparatus and causing the policy management apparatus to determine the target policy according to the download request and transmit the target policy to the SDK module by the SDK module.

8. A management apparatus, comprising: a reception apparatus, wherein the reception apparatus comprises:
an obtaining module configured to obtain input information through an input source;
a determination module configured to determine a target execution instruction according to the input information;
a control module configured to control a first executor to execute the target execution instruction; and
a transmission module configured to determine a predicted execution result according to the target execution instruction, transmit the predicted execution result to a second executor and cause the second executor to display the predicted execution result.

9. An electronic device, comprising:
a processor; and
a memory configured to store a program; wherein
the processor implements the method according to any one of claims 1-7 when the program is executed by the processor.

10. A computer-readable storage medium, storing a computer program, wherein the computer program implements the method according to any one of claims 1-7 when executed by a processor.
